(19) Europäisches Patentamt
European Patent Office
Office européen des brevets

(11) Publication number: **0 197 561**
**B1**

(12) # EUROPEAN PATENT SPECIFICATION

(45) Date of publication of patent specification: **14.03.90**

(51) Int. Cl.$^5$: **C 03 C 13/04,** C 03 B 37/025

(21) Application number: **86104923.7**

(22) Date of filing: **10.04.86**

(54) **Method of fabricating alumina-doped silica fibres using organometallic compounds.**

(30) Priority: **10.04.85 IT 6733885**

(43) Date of publication of application:
**15.10.86 Bulletin 86/42**

(45) Publication of the grant of the patent:
**14.03.90 Bulletin 90/11**

(84) Designated Contracting States:
**CH DE FR GB LI NL SE**

(56) References cited:
**GB-A-2 118 320**
**US-A-4 175 118**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Parisi, Giuseppe**
**Via Buscaglioni, 2**
**Torino (IT)**
Inventor: **Roba, Giacomo**
**Via dei pini domestici, 5**
**Cogoleto (Genova) (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 197 561 B1

## Description

The present invention relates to industrial manufacture of physical carriers for optical telecommunications systems and more particularly it relates to a method of fabricating alumina-doped silica fibres using organometallic compounds.

As known, among dopants germanium dioxide ($GeO_2$) is chiefly used in CVD techniques for fabricating the optical fibre core, both in case of inside processes (IVPO) and in case of outside processes (OVPO).

In fact, $GeO_2$ gives with silica a binary network having a stable vitreous state. Besides, halide source, wherefrom germanium tetrachloride ($GeCl_4$) is obtained by oxidation synthesis, is particularly suited for use in CVD techniques, since, at room temperature it is an easily vaporable liquid (melting temperature $T_m = -49.5°C$; boiling temperature $T_b = 84°C$).

The optical properties of germanium dioxide are particularly interesting: null material dispersion at wavelength of 1.74 μm; infrared absorption peak due to molecular vibration of Ge—O bond centered at a wavelength of about 12 μm.

The latter property prevents modifications of the silica spectral-attenuation curve, which presents an infrared adsorption peak for the moleculare vibration of Si—O bond centered at a slightly inferior wavelength (9.1 μm).

For these reasons germanium dioxide is nowadays the most widely used compound in optical fibre technology and the only one used for fabricating the core of silica-based optical fibres.

It presents, however, two disadvantages:

i) high cost of raw material;

ii) Rayleigh scattering coefficient higher than that of pure silica, whose value is about 0.6 $dB/km/\mu m^4$.

Germanium dioxide effect in the binary network $SiO_2$-$GeO_2$ is that of increasing the scattering coefficient value proportionally to concentration of the dopant present in the network.

That is detrimental to material performance due to a high rising of minimum attenuation values.

Alumina ($Al_2O_3$) is an alternative material to $GeO_2$; in fact, besides presenting all the advantages of germanium dioxide, it presents the following characteristics:

a) Rayleigh scattering coefficient inferior to that of silica;

b) low cost of raw materials;

c) high melting temperature.

It is of interest to underline the fact that a scattering coefficient lower than that of silica can allow the lowest attenuation levels to be reached for silica-based vitreous networks.

More particularly with vitreous networks $SiO_2$-$Al_2O_3$ a minimum attenuation value lower than that of silica can be obtained; for silica this value is equal to 0.12 dB/km in the wavelength range around 1.56 μm.

Point c), i.e. high melting temperature, allows a number of interesting remarks.

The melting temperature of alumina (2045°C) is higher than those of silica (1703°C) and of germanium oxide (1086°C). The physical properties of network $SiO_2$-$Al_2O_3$ are hence more similar to those of $SiO_2$ network, that those of $SiO_2$-$GeO_2$ network.

In addition, the presence of a compound with higher melting point prevents the dopant diffusion towards the periphery during the preform collapsing step.

As a consequence, alumina-doped silica fibres fabricated according to MCVD technique do not present any dip (i.e. central refractive index decrease). This is a typical anomaly in the profile of germanium-dioxide doped silica fibres, fabricated with the same method.

The main disadvantage preventing the alumina from being industrially utilized resides in the fact that liquid or gaseous compounds at room temperature, to be used as aluminum vehicles and hence suited to CVD techniques, are difficult to be found.

Aluminum halides are solid at room temperature and have rather high boiling temperatures. For example, $AlF_3$ sublimes at 1291°C, $AlCl_3$ sublimes at 178°C, $AlBr_3$ melts at 97°C and boils at 263°C, $AlI_3$ melts at 191°C and boils at 360°C. The use of CVD technique with such raw materials requires reactant mixing and vaporization lines thermostated at high temperature. That entails implementing difficulties and does not assure pollution-free synthesis products.

Besides, solid compounds at room temperature are more difficult to purify with respect to liquid or gaseous ones, hence they can contain residual impurities detrimental to optical properties.

The use of $AlCl_3$ as a basic aluminum vehicle has been already suggested in the paper entitled "Fabrication of Low-Loss $Al_2O_3$ doped silica fibres" by Y. Ohmori et al. Electronics Letters, 2 September 1982, Vol. 18, No. 18, yet no valuable results have been obtained.

Furthermore GB—A—2 118 320 discusses the use of trimethylalumina as a source of dopant material while oxygen is used as the oxidizer.

A method of fabricating alumina-doped silica fibres has been reported in the Italian Patent Application n. 68135—A/84, filed on 13th November 1984 in the name of the same Applicant, corresponding to the earlier European patent application EP—A—18225, wherein silica and dopant are obtained by the reaction between gaseous chemical compounds, characterized in that the dopant above is obtained by the reaction between oxygen and an organometallic compound of $Al(C_\alpha H_\beta)\zeta$ or of $AlCl(C_\alpha H_\beta)\psi$ types, where α, β, ζ, ψ are respectively the coefficients of presence in molecula of atoms C, H and of CH group, respectively.

These organometallic compounds are liquid at room temperature; hence this method allows silica to

be doped with alumina by using a Chemical-Vapour-Deposition technique (CVD) without requiring the use of vaporization and mixing lines thermostated at high temperature. The obtained optical fibres present low attenuation and are not affected with the dip.

However organometallic compounds are highly reactive with oxygen even at low temperature.

This is a drawback because the reaction, besides occurring spontaneously, presents high efficiency, with consequent difficulty of controlling the deposition phase of produced silica and alumina.

In addition this high aluminum alkyl reactivity with oxygen presents serious problems concerning plant security.

These disadvantages are overcome by the method of fabricating alumina-doped silica fibres provided by the present invention which, without using oxygen as an oxidizer, allows a better control of the reactions and of the following deposition phase of produced compounds, also obviating to the plant security problems.

The main object of the present invention is a method of fabricating alumina-doped silica fibres, wherein silica and dopant are obtained by the reaction among gaseous chemical compounds, comprising, for obtaining the dopant, organometallic aluminum compounds, characterized in that without using oxygen carbon dioxide is used as an oxidizer in that reaction among gaseous chemical compounds.

Further preferred details of the invention will appear from the following description, by way of non limiting examples, of an embodiment of the invention and a variant.

Alumina to be used as silica dopant in a CVD process is obtained from organometallic aluminum compounds, such as, e.g., Trimethylaluminum, Triethylaluminum, Dymethylaluminum chloride and Dyethilaluminum chloride. The chemical formulae, melting temperatures $T_m$ and boiling temperatures $T_b$ of said four compounds are reported as follows:

| Compound | Formula | $T_m$ [°C] | $T_b$ |
|---|---|---|---|
| Trimethylaluminum | $Al(CH_3)_3$ | 0 | 130 |
| Triethylaluminum | $Al(C_2H_5)_3$ | −50.5 | 194 |
| Dimethylaluminum chloride | $AlCl(CH_3)_2$ | −50 | 84 (pressure 26.6 KPa) |
| Diethylaluminum chloride | $AlCl(C_2H_5)_2$ | −50 | 126 (pressure 8 KPa) |

They are compounds either of $Al(C_nH_{2n+1})_3$ type, or of $AlX_m(C_nH_{2n+1})_{3-m}$ type, where X is a halogen and m the coefficients of presence in molecula of halogen atoms.

These compounds are liquid at room temperature and easily vaporizable.

Aluminum alkyls are easily decomposable at temperature higher than 300°C into metal aluminum, olefine and hydrogen according to the following reactions.

$$2Al(C_nH_{2n+1})_3 \rightarrow 2Al + 3H_2 + 6C_nH_{2n}$$

$$2AlCl(C_nH_{2n+1})_2 \rightarrow 2Al + H_2 + 2HCl + 4C_nH_{2n}$$

Afterwards, at temperatures used in MCVD process, the aluminum produced can react with carbon dioxide as follows:

$$2Al + 3CO_2 \xrightarrow{1700°C} Al_2O_3 + 3CO$$

Then according to the present invention carbon dioxide $CO_2$ is used as an oxidizer instead of oxygen $O_2$ in MCVD process.

At temperatures used in MCVD techniques, of the order of 1700°C to 1800°C, the reaction directly involved between the organometallic aluminum compound and carbon dioxide is of the following type.

$$2AlCl(CH_3)_2 + 12CO_2 \xrightarrow{1700°C} Al_2O_3 + 16CO + 2HCl + 5H_2O$$

As silica former compounds, according to a preferred embodiment of the present invention, organometallic silicon compounds of $Si(C_\alpha H_\beta)\zeta$, $Si(C_\alpha H_\beta)\psi X_n$ type are used, where X is a halogen and α, β, n, ζ, ψ are the coefficients of presence in molecular of atoms C, H, Alogen, groups $C_\alpha H_\beta$ respectively.

These compounds can be either liquid or gaseous at room temperature and their chemical behaviour is similar to the behaviour of organometallic silicon compounds already examined: they can be e.g. Tetra-

methylsilicon, Dymethyldyethylsilicon, Tetraethylsilicon, Triethylsilicon chloride, Dyethylsilicon dychloride, and Dymethylsilicon dychloride, which are liquid at room temperature.

The chemical formulae, and boiling temperatures $T_b$ of said compounds are reported as follows:

| Compound | $T_b$° [C] |
|---|---|
| $(CH_3)_4Si$ | 26,5 |
| $(CH_3)_2(C_2H_5)_2Si$ | 95,8 |
| $(C_2H_5)_4Si$ | 152,8 |
| $(C_2H_5)_3SiCl$ | 144 (pressure 98 KPa) |
| $(C_2H_5)_2SiCl_2$ | 129 |
| $(CH_3)_2SiCl_2$ | 70 |

The above-listed organometallic silicon compounds are more stable than aluminum compounds, but at the temperatures used in MCVD techniques they also decompose (decomposition temperature higher than 600°C).

As a consequence, by using $CO_2$ as an oxidizer, silicium and simple moleculae are obtained with a reaction behaviour similar to that seen for alumina formation.

An example of the reaction of organometallic silicium compounds with $CO_2$ is given below:

$$(CH_3)_2SiCl_2 + 6CO_2 \rightarrow SiO_2 + 8CO + 2HCl + 2H_2O$$

For the vaporization of liquid reactants composed of organometallic aluminum and silicon compounds, inert gases are used such as Argon.

From the above-mentioned oxidation reactions at said temperatures, in addition to alumina and silica formation, simple moleculae are obtained such as e.g., water, carbon monoxide, and hydrogen chloride.

Carbon monoxide and hydrogen chloride are volatile compounds and are expelled with the main flow of reaction products and reactants which have not participated in the reaction. The water could be incorporated with the network and cause optical absorption losses.

In case outside deposition processes were used (OVPO = Outside Vapour Phase Oxidation), such as e.g. OVD (Outside Vapour Deposition) and VAD (Vapour Axial Deposition), the water incorporated during the synthesis is expelled during drying and consolidating phase, after the deposition. Reaction products $CO_2$, HCl, $H_2O$ are also typical products of basical reactions of these deposition techniques and hence they do not give rise to pollution problems.

Using inside deposition techniques (IVPO) such as, e.g. MCVD technique (Modified Chemical Vapour Deposition) the obstacle can be overcome by a "soft", non-consolidated deposition, effecting then a layer by layer drying and consolidating of the deposit in presence of chlorine as dehydrating agent.

This operation does not reduce the process productivity in case of monomode-fibre manufacture, as the number of layers necessary to core fabrication is quite limited.

It is clear that what described has been given only by way of non limiting example. Variations and modifications are possible without going out of the scope of the present invention.

More particularly, other organometallic compounds can be used to produce alumina and silica according to the following general formula:

$$Al(C_\alpha H_\beta)_\theta O_m,\ Si(C_\alpha H_\beta)_y O_m$$

where α, β and m are respectively the coefficients of presence in molecula of atoms C, H and O; θ, y are the coefficients of presence in molecula of groups $C_\alpha H_\beta$. These compounds are liquid or gaseous at room temperature.

Silicon tetrachloride $SiCl_4$ can be used as a silica forming compound, obtaining the following oxidation reaction:

$$SiCl_4 + 2CO_2 \xrightarrow{1700°C} SiO_2 + 2Cl_2 + 2CO$$

However, in said case in the conduit carrying the reactant vapours to the supporting tube used in MCVD techniques the following reaction between $SiCl_4$ and aluminum alkyl is possible:

$$3SiCl_4 + 4AlR_3 \rightarrow 3SiR_4 + 4AlCl_3$$

where R indicates an alkyl group such as e.g. $CH_3$; $CH_2—CH_3$ (methyl and ethyl).

Such a reaction can occur upstream the zone where the main reaction occurs and could give rise to problems of deposition of $AlCl_3$ solid particles along the feeding line; which can be prevented by high reactant dilution with an inert gas so as to reduce to the minimum the above-cited reaction efficiency.

**Claims**

1. A method of fabricating alumina-doped silica optical fibres, wherein silica and dopant are obtained by the reaction among gaseous chemical compounds, which gaseous chemical compounds comprise for obtaining the dopant organometallic aluminum compounds, characterized in that without using oxygen carbon dioxide is used as an oxidizer in that reaction among gaseous chemical compounds.

2. A method according to claim 1, wherein silica is obtained by reaction between carbon dioxide and organometallic silicon compounds easily vaporizable at room temperature.

3. A method according to claim 2, wherein said organometallic silicon compounds are of the type:

$$Si(C_\alpha H_\beta)\zeta$$

$$Si(C_\alpha H_\beta)\psi X_n$$

$$Si(C_\alpha H_\beta)_y O_m$$

where X is a halogen; α, β, n, m are the coefficients of presence in molecula of atoms C, H, halogen, O; ζ, ψ, y are the coefficients of presence in molecula of groups $C_\alpha H_\beta$.

4. A method, according to claim 1, wherein silica is obtained by reaction between carbon dioxide and silicon tetrachloride.

**Patentansprüche**

1. Verfahren zur Herstellung von Lichtleitfasern aus mit Aluminiumoxid dotiertem Siliciumdioxid, wobei das Siliciumdioxid und der Dotierungstoff durch die Reaktion zwischen gasförmigen chemischen Verbindungen erhalten wird, die zum Erhalten des Dotierungsstoffs organometallische Aluminiumverbindungen umfassen, dadurch gekennzeichnet, daß ohne Verwendung von Sauerstoff Kohlendioxid als Oxidationsmittel in der Reaktion zwischen den gasförmigen chemischen Verbindungen verwendet wird.

2. Verfahren nach Anspruch 1, dadurch gekennzeichnet, daß das Siliciumdioxid durch eine Reaktion zwischen Kohlendioxid und organometallischen Siliciumverbindungen, die bei Zimmertemperatur leicht verdampfbar sind, erhalten wird.

3. Verfahren nach Anspruch 2, dadurch gekennzeichnet, daß die organometallischen Siliciumverbindungen von der Art sind:

$$Si(C_\alpha H_\beta)\zeta$$

$$Si(C_\alpha H_\beta)_y O_m$$

wobei X = ein Halogen; α, β, n, m = Koeffizienten der Präsenz der Atome C, H, Halogen, O im Molekül; ζ, ψ, y = Koeffizienten der Präsenz der Gruppen $C_\alpha H_\beta$ im Molekül.

4. Verfahren nach Anspruch 1, dadurch gekennzeichnet, daß das Siliciumdioxid durch eine Reaktion zwischen Kohlendioxid und Siliciumtetrachlorid erhalten wird.

**Revendications**

1. Procédé de fabrication de fibres optiques en silice dopée à l'alumine, selon lequel la silice et le dopant sont obtenus par la réaction entre des composés chimiques à l'état gazeux, ces composés chimiques à l'état gazeux comprennent des composés organométalliques de l'aluminium pour obtenir le dopant, caractérisé en ce que sans employer l'oxygène de l'anhydride carbonique est utilisé comme un oxydant dans ladite réaction entre les composés à l'état gazeux.

2. Procédé selon la revendication 1, caractérisé en ce que la silice est obtenue par la réaction entre anhydride carbonique et des composés organométalliques du silicium, qui peuvent être aisément vaporisés à la température ambiante.

3. Procédé selon la revendication 2, caractérisé en ce que ces composés organométalliques du silicium sont du type:

$Si(C_{\alpha}H_{\beta})\zeta$

$Si(C_{\alpha}H_{\beta})\psi X_n$

$Si(C_{\alpha}H_{\beta})_y O_m$

où X est un halogène; α, β, n, m sont les coefficients de présence dans la molécule des atomes C, H, de l'halogèe et de O; ζ, ψ, y sont les coefficients de présence dans la molécule des groupes $C_{\alpha}H_{\beta}$.

4. Procédé selon la revendication 1, caractérisé en ce que la silice est obtenue par la réaction entre anhydride carbonique et tétrachlorure de silicium.